# EUROPEAN PATENT APPLICATION

(11) **EP 4 815 292 A1**
(43) Date of publication of application: **30.09.2026**
(21) Application number: 26165268.9
(22) Date of filing: 17.03.2026
(51) Int. Cl.: H02P 6/32, H02J 7/00, H02P 6/15, H02P 25/022, H02P 27/06

(54) **DRIVE DEVICE FOR FIELD WINDING-TYPE ROTATING ELECTRICAL MACHINE**

(30) Priority: 27.03.2025 JP 2025053094
(71) Applicant: AISIN CORPORATION, Kariya, Aichi 448-8650 (JP)
(72) Inventor: KAI, Masashi, Aichi 448-8650 (JP); OGURA, Kota, Aichi 448-8650 (JP); TAKAHASHI, Tetsuya, Aichi 448-8650 (JP)
(74) Representative: Kramer Barske Schmidtchen Patentanwälte PartG mbB

(57) **Abstract**

In one aspect, there is provided a drive device (5) for a rotating electrical machine that drives a field winding-type rotating electrical machine (3) in which a rotor winding (316) is wound around a rotor core (312), the drive device (5) including: an electric circuit unit (60) between the rotating electrical machine (3) and a power supply; and a control device (150) that controls the electric circuit unit (60), the electric circuit unit (60) includes a smoothing capacitor (62) between a high-potential side line and a low-potential side line of the power supply, a power conversion circuit unit (63) that is electrically connected to both ends of the smoothing capacitor (62) and supplies alternating current power to a stator winding (312) of the rotating electrical machine (3), and a power supply circuit unit (64) that is electrically connected to both ends of the smoothing capacitor (62) in a manner parallel with the power conversion circuit unit (63) and configured to supply power to the rotor winding (316) and, the control device (150) includes a first control unit (155) that drives both the power conversion circuit unit (63) and the power supply circuit unit (64) when the smoothing capacitor (62) is discharged, a second control unit (156) that drives only one of the power conversion circuit unit (63) and the power supply circuit unit (64) when the smoothing capacitor (62) is discharged, and a selection unit (154) that selectively activates one of the first control unit (155) and the second control unit (156) based on a predetermined condition.

## Description

### TECHNICAL FIELD

The present disclosure relates to a drive device for a field winding-type rotating electrical machine.

### BACKGROUND DISCUSSION

As a configuration included in a vehicle drive device equipped with a power conversion device, rapid discharge is known in which, under a predetermined condition, a switching element electrically connected in parallel with a smoothing capacitor is turned on to cause electric charge accumulated in the smoothing capacitor to flow to the ground via a discharge resistor (see, for example, JP 2016-86578 A).

In a field winding-type rotating electrical machine in which a rotor winding is wound around a rotor core, discharge control can also be realized by driving a power supply circuit unit that supplies electric power to the rotor winding, thereby electrically connecting both ends of the smoothing capacitor via the rotor winding.

However, in the conventional technique as described above, there is a problem in that the discharge control method is singular, and discharge control corresponding to various states cannot be executed.

A need thus exists for a drive device for a rotating electrical machine that is capable of executing various discharge controls in accordance with various states.

### SUMMARY

In one aspect, there is provided a drive device for a rotating electrical machine that drives a field winding-type rotating electrical machine in which a rotor winding is wound around a rotor core, the drive device including:
an electric circuit unit between the rotating electrical machine and a power supply; and
a control device that controls the electric circuit unit,
the electric circuit unit includes
a smoothing capacitor between a high-potential side line and a low-potential side line of the power supply,
a power conversion circuit unit that is electrically connected to both ends of the smoothing capacitor and supplies alternating current power to a stator winding of the rotating electrical machine, and
a power supply circuit unit that is electrically connected to both ends of the smoothing capacitor in a manner parallel with the power conversion circuit unit and configured to supply power to the rotor winding and,
the control device includes
a first control unit that drives both the power conversion circuit unit and the power supply circuit unit when the smoothing capacitor is discharged,
a second control unit that drives only one of the power conversion circuit unit and the power supply circuit unit when the smoothing capacitor is discharged, and
a selection unit that selectively activates one of the first control unit and the second control unit based on a predetermined condition.

In one aspect, according to the present disclosure, various discharge controls can be executed in accordance with various states.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a configuration diagram illustrating a vehicle drive system including a drive device for a rotating electrical machine according to the present embodiment;
Fig. 1A is a diagram obtained by extracting a main circuit unit excluding a control device such as a microcomputer in the vehicle drive system of Fig. 1;
Fig. 2 is a schematic cross-sectional view illustrating a part of a cross section of a rotating electrical machine;
Fig. 3 is a schematic flowchart illustrating an example of processing of a microcomputer related to rapid discharge of a smoothing capacitor;
Fig. 3A is a block diagram illustrating functions of a microcomputer that implements the processing of Fig. 3;
Fig. 4 is a schematic flowchart illustrating an example of a discharge process (a process implemented by a selection unit) corresponding to a system state;
Fig. 5 is an explanatory diagram of Fig. 4, illustrating various predetermined conditions;
Fig. 6 is an explanatory diagram of a discharge state (part 1) formed by a first control unit and a second control unit via a selection unit;
Fig. 7 is an explanatory diagram of a discharge state (part 2) formed by the first control unit and the second control unit via the selection unit;
Fig. 8 is an explanatory diagram of a discharge state (part 3) formed by the first control unit and the second control unit via the selection unit;
Fig. 9 is an explanatory diagram of a discharge state (part 4) formed by the first control unit and the second control unit via the selection unit;
Fig. 10 is a schematic flowchart illustrating another example of the processing of the microcomputer related to rapid discharge of the smoothing capacitor;
Fig. 10A is a block diagram illustrating functions of a microcomputer that implements the processing of Fig. 10;
Fig. 11 is an explanatory diagram of Fig. 10, illustrating various predetermined conditions; and
Fig. 12 is a flowchart illustrating a further detailed control example of the microcomputer in the second embodiment.

### DETAILED DESCRIPTION

Hereinafter, each embodiment will be described in detail with reference to the accompanying drawings. Note that the dimensional ratios in the drawings are merely examples, the dimensional ratios are not limited thereto, and the shapes and the like in the drawings may be partially exaggerated for convenience of description. In the drawings, only some of a plurality of sections with the same attribute may be denoted by reference numerals for the sake of clarity. In the following description, the term "predetermined" means set in advance.

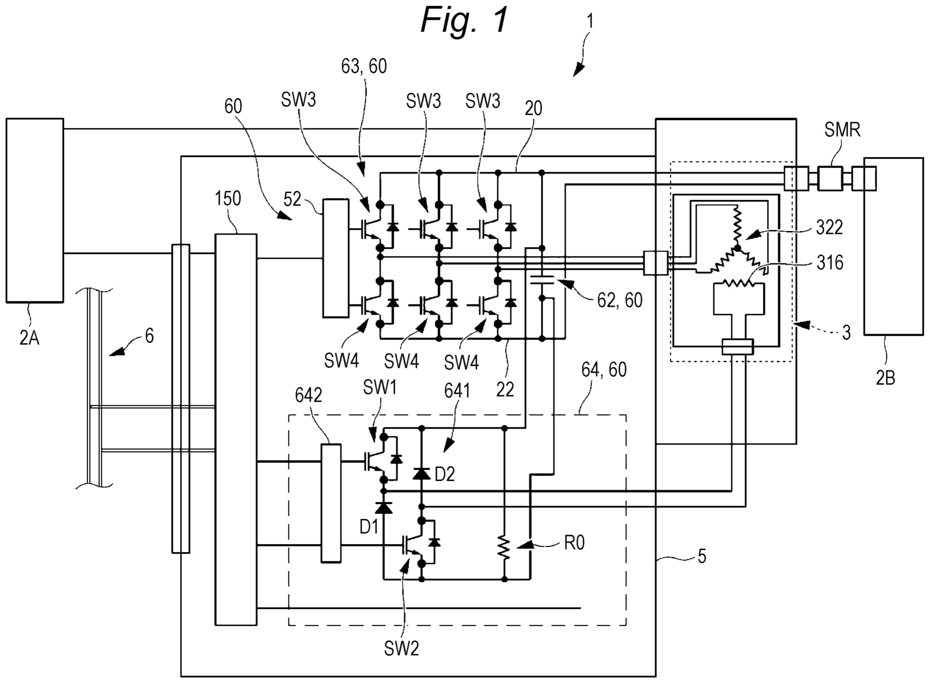

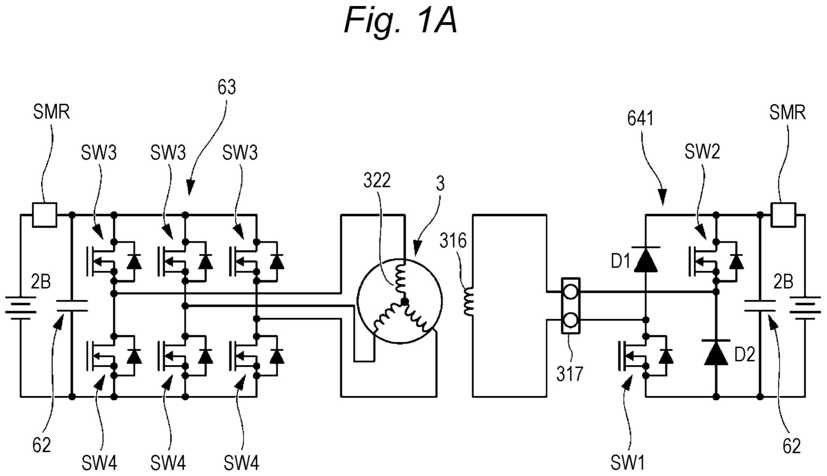

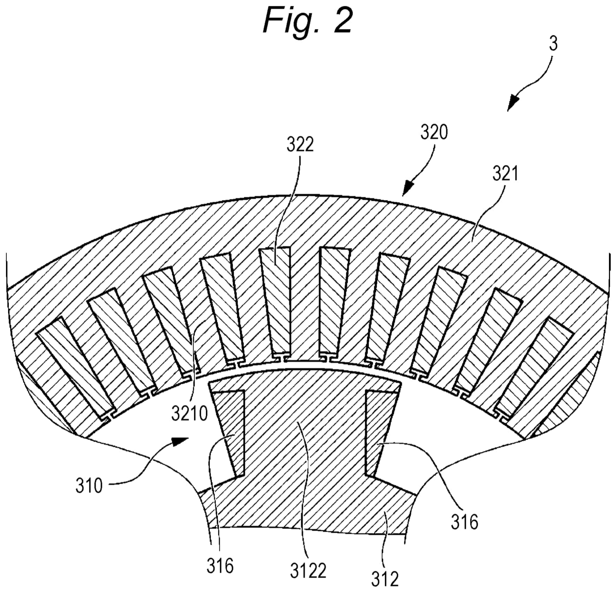

Fig. 1 is a configuration diagram illustrating a vehicle drive system 1 including a drive device 5 for a rotating electrical machine according to the present embodiment. Fig. 1A is a diagram of the vehicle drive system 1 of Fig. 1, obtained by extracting a main circuit unit excluding a control device such as a microcomputer 150. Fig. 2 is a schematic cross-sectional view illustrating a part of a cross section of a rotating electrical machine 3.

The vehicle drive system 1 has a dual power supply configuration including a low-voltage battery 2A and a high-voltage battery 2B, and includes a rotating electrical machine 3 and a drive device 5.

The low-voltage battery 2A is, for example, a lead battery, and has a rated voltage of, for example, 12 V.

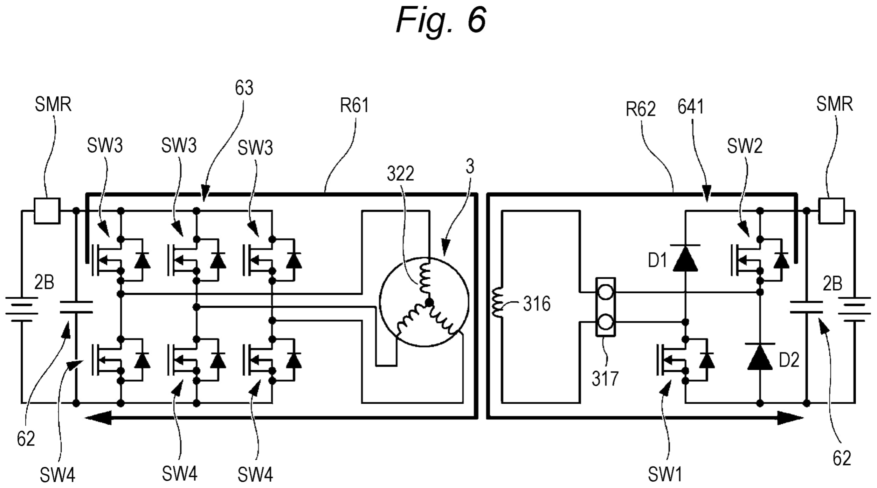

The high-voltage battery 2B is, for example, a lithium-ion battery, and has a rated voltage significantly higher than that of the low-voltage battery 2A, for example, a rated voltage of 40 V or more. In the present embodiment, as an example, the rated voltage of the high-voltage battery 2B is assumed to be 300 V or more. Note that the high-voltage battery 2B may be in the form of a fuel cell or the like. In Fig. 1A (the same applies to Fig. 6 and the like described later), for convenience, the high-voltage battery 2B is illustrated as being divided into left and right portions, but is a single common battery. The high-voltage battery 2B may be formed of a plurality of battery cells.

The rotating electrical machine 3 is of a wound field type, and includes a rotor 310 in which a rotor winding 316 is wound around a rotor core 312. As illustrated in Fig. 2, the rotor core 312 includes a tooth portion 3122 protruding radially outward, and a conductor wire forming rotor winding 316 is wound around the tooth portion 3122. A stator 320 is provided radially outside the rotor 310. As illustrated in Fig. 2, the stator winding 322 is wound around the tooth portion 3210 of a stator core 321.

The drive device 5 includes a microcomputer 150 (hereinafter referred to as "microcomputer 150") (an example of a control device) and an electric circuit unit 60.

The microcomputer 150 may be implemented as, for example, an electronic control unit (ECU). The microcomputer 150 is connected to various electronic components (other ECUs and sensors) in the vehicle via a network 6 such as a controller area network (CAN).

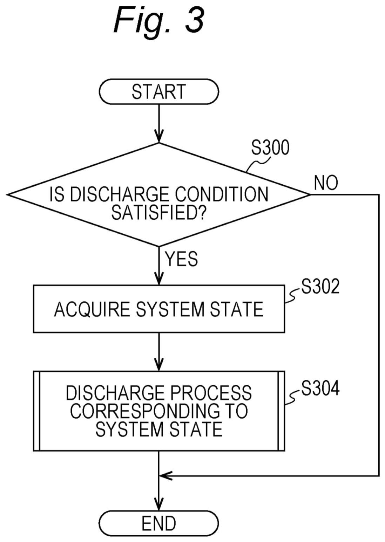

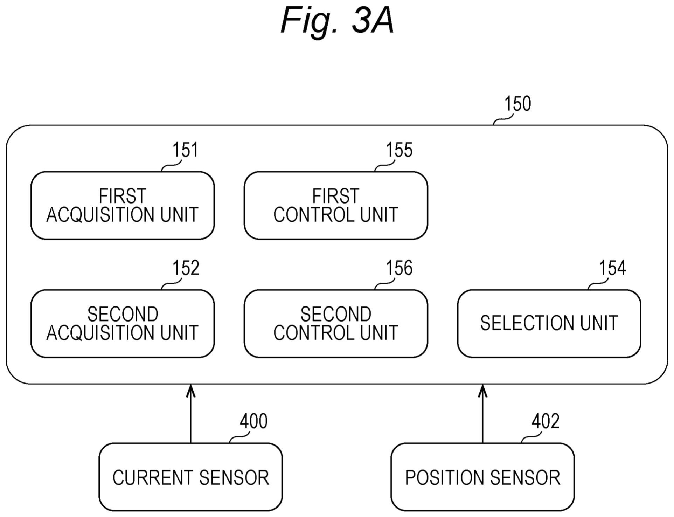

Note that the microcomputer 150 may be implemented by an arbitrary computer, and a hardware configuration is arbitrary. The functions implemented by the microcomputer 150 (see, for example, Fig. 3A described later) may be implemented in a circuitry or a processing circuitry including a general-purpose processor, an application-specific processor, an integrated circuit, application specific integrated circuits (ASICs), a central processing unit (CPU), a conventional circuit, and/or a combination thereof programmed to implement the described functions. The processor includes a transistor and other circuits, and is regarded as circuitry or processing circuitry. The processor may be a programmed processor that executes a program stored in a memory.

The microcomputer 150 receives, via the network 6, various commands such as a control command from a host ECU (not illustrated) and a rapid discharge command to be described later. The microcomputer 150 controls the rotating electrical machine 3 via the electric circuit unit 60 based on the control command. The microcomputer 150 executes, based on the rapid discharge command, a rapid discharge process of a smoothing capacitor 62 to be described later.

The microcomputer 150 operates based on electric power from the low-voltage battery 2A. Specifically, the microcomputer power supply IC (not illustrated) generates a power supply voltage for the operation of the microcomputer 150 based on electric power from the low-voltage battery 2A.

The electric circuit unit 60 includes a smoothing capacitor 62, a power conversion circuit unit 63, and a power supply circuit unit 64. In Fig. 1A (the same applies to Fig. 6 and the like described later), for convenience, the smoothing capacitor 62 is illustrated as being divided into left and right portions, but is a single common capacitor.

The smoothing capacitor 62 is provided between a high-potential-side line 20 and a low-potential-side line 22 of the high-voltage battery 2B. A resistor R0 for passive discharge may be connected to both ends of the smoothing capacitor 62. The resistor R0 for passive discharge has a function of removing electric charge of the smoothing capacitor 62 when a dealer or a user performs maintenance of a vehicle or when rapid discharge described later does not function. Note that the time required for discharge by the resistor R0 for passive discharge is significantly longer than that required for rapid discharge to be described later.

The power conversion circuit unit 63 is in the form of an inverter, and forms, for example, a three-phase bridge circuit. The power conversion circuit unit 63 is connected between the high-potential-side line 20 and the low-potential-side line 22 in a manner parallel with the smoothing capacitor 62. The power conversion circuit unit 63 includes switching elements SW3 of arms on the high potential side and switching elements SW4 of arms on the low potential side. The microcomputer 150 controls energization of the stator winding 322 by controlling on/off state of the switching elements SW3, SW4 of the power conversion circuit unit 63 via a gate driver circuit 52.

The power supply circuit unit 64 includes a bridge circuit unit 641 and a drive circuit unit 642.

The bridge circuit unit 641 is connected between the high-potential-side line 20 and the low-potential-side line 22 in a manner parallel with the smoothing capacitor 62 and the resistor R0 for passive discharge. The bridge circuit unit 641 includes a pair of switching elements SW1, SW2 and a pair of diodes D1, D2. The switching element SW1 is connected in series with the diode D1 so as to be connected to the cathode on the high potential side of the diode D1. One end of the rotor winding 316 is connected between the switching element SW1 and the diode D1. The switching element SW2 is connected in series with the diode D2 so as to be connected to the anode on the low potential side of the diode D2. The other end of the rotor winding 316 is connected between the switching element SW2 and the diode D2. Hereinafter, among the pair of switching elements SW1, SW2, the switching element SW1 and the configuration related to the switching element SW1 may be denoted by "high potential side" for distinction, and the switching element SW2 and the configuration related to the switching element SW2 may be denoted by "low potential side".

The on/off state of the pair of switching elements SW1, SW2 is switched via the drive circuit unit 642. The pair of switching elements SW1, SW2 changes the energization state with respect to the rotor winding 316 under the control of the drive circuit unit 642. The switching elements SW1, SW2 are, for example, insulated gate bipolar transistors (IGBTs), but may have other forms such as metal-oxide-semiconductor field-effect transistors (MOSFETs). In the present embodiment, the rotor winding 316 is electrically connected to the power supply circuit unit 64 by contact between the slip ring 317 and a brush (not illustrated), but may be electrically connected in a non-contact manner using a transformer or the like.

The drive circuit unit 642 includes a pair of gate driver integrated circuits (ICs) 6421, 6422. The pair of gate driver ICs 6421, 6422 is provided between the microcomputer 150 and the pair of switching elements SW1, SW2. The gate driver IC 6421 on the high potential side drives the gate of the switching element SW1 on the high potential side based on the control signal from the microcomputer 150, and the gate driver IC 6422 on the low potential side drives the gate of the switching element SW2 on the low potential side based on the control signal from the microcomputer 150.

Next, an operation example of the vehicle drive system 1 related to rapid discharge of the smoothing capacitor 62 will be described.

Rapid discharge of the smoothing capacitor 62 is realized by discharging electric charge (electric charge from the high-voltage battery 2B) accumulated in the smoothing capacitor 62 within a relatively short time ΔT defined in advance. Note that the smoothing capacitor 62 accumulates electric charge corresponding to the voltage across the high-voltage battery 2B when the rotating electrical machine 3 is driven. The relatively short time ΔT may be about 1 or 2 seconds corresponding to the existing request value. The end time point of the rapid discharge may be a time point when the voltage across the smoothing capacitor 62 becomes equal to or less than a reference voltage (e.g., 60 V). The safety of the vehicle can be enhanced by realizing such rapid discharge of the smoothing capacitor 62 when a rapid discharge condition is satisfied.

Fig. 3 is a schematic flowchart illustrating an example of processing of the microcomputer 150 related to rapid discharge of the smoothing capacitor 62. Fig. 3A is a block diagram illustrating functions of the microcomputer 150 that implements the processing of Fig. 3.

In step S300, the microcomputer 150 determines whether the rapid discharge condition (labeled "discharge condition" in the figure) is satisfied. The rapid discharge condition is arbitrary, and may be satisfied, for example, when an abnormality or the like as described below occurs. Alternatively, the rapid discharge condition may be established when a vehicle collision event or a collision-unavoidable event occurs. The collision event of the vehicle may be detected based on information that can be acquired via the network 6 (e.g., information indicating activation of an irreversible auxiliary occupant protection device such as an air bag). The collision-unavoidable event may be detected based on information that can be acquired via the network 6 (e.g., information indicating that Time To Collision (TTC) has become equal to or less than a prescribed time, information indicating operation of the automatic braking device, etc.). Alternatively, the rapid discharge condition may be satisfied when a rapid discharge command is acquired via the network 6. Alternatively, the rapid discharge condition may be satisfied when a system main relay SMR (see Fig. 1) is interrupted. Note that the system main relay SMR may be interrupted when a vehicle collision event occurs, or the like. When the system main relay SMR is interrupted, the system is electrically disconnected from the high-voltage battery 2B.

In step S302, the microcomputer 150 acquires (recognizes) the respective states of the stator 320 and the rotor 310. The respective states of the stator 320 and the rotor 310 may be determined (recognized) based on sensor information from various sensors used for controlling the stator 320 and the rotor 310.

In the present embodiment, the microcomputer 150 acquires sensor information (hereinafter also referred to as stator-side sensor information) used for control of the stator 320 (i.e., control of the power conversion circuit unit 63). The stator-side sensor information may include sensor information from a current sensor 400, a position (angle) sensor 402, and the like used for controlling the stator 320. The current sensor 400 may be provided for each phase so as to detect a current flowing through each phase of the rotating electrical machine 3. The position sensor 402 may be in the form of a resolver or the like. The stator-side sensor information may also include sensor information for detecting an abnormality (significant error or failure) in the power conversion circuit unit 63. In this case, the microcomputer 150 implements an example of a first acquisition unit 151 (see Fig. 3A) that acquires the stator-side sensor information.

The microcomputer 150 also acquires sensor information (hereinafter also referred to as rotor-side sensor information) used for energization control of the rotor winding 316. The rotor-side sensor information may include sensor information for detecting an abnormality (significant error or failure) in the bridge circuit unit 641 or the drive circuit unit 642. In this case, the microcomputer 150 implements an example of a second acquisition unit 152 (see Fig. 3A) that acquires the rotor-side sensor information.

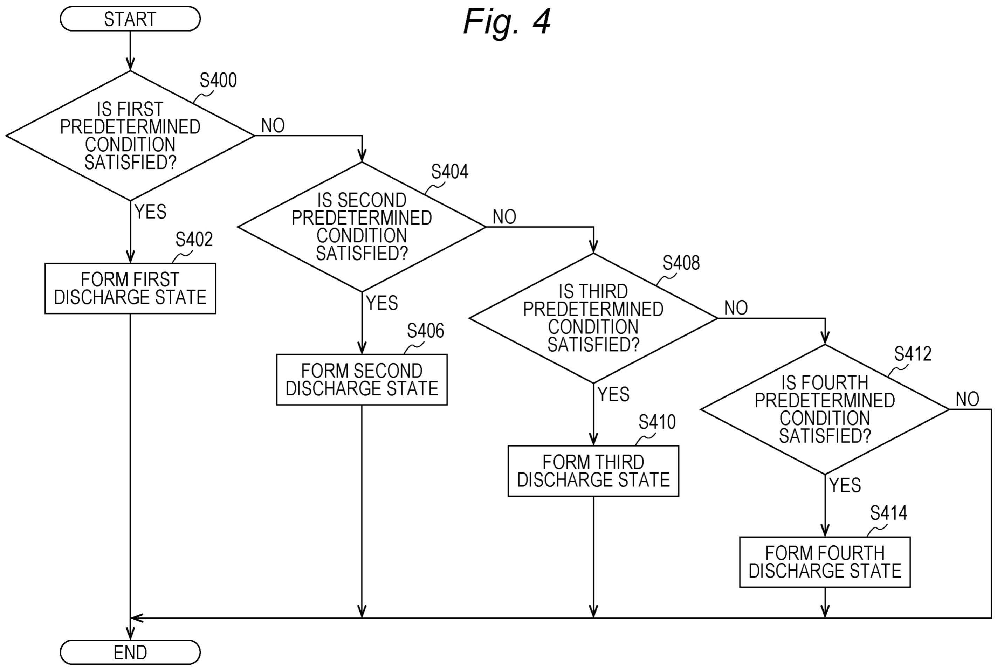

In step S304, the microcomputer 150 executes the discharge process corresponding to the system state based on each state (hereinafter also referred to as a "system state") obtained in step S302. Specifically, the microcomputer 150 executes one selected discharge process among a plurality of types of discharge processes. At this time, which discharge process among the plurality of types of discharge processes is executed is determined (selected) in accordance with the system state. In this case, the microcomputer 150 implements an example of a selection unit 154 (see Fig. 3A). An example of the discharge process corresponding to each state will be described in detail with reference to Fig. 4.

As described above, according to the processing illustrated in Fig. 3, various discharge control can be executed in accordance with the system state.

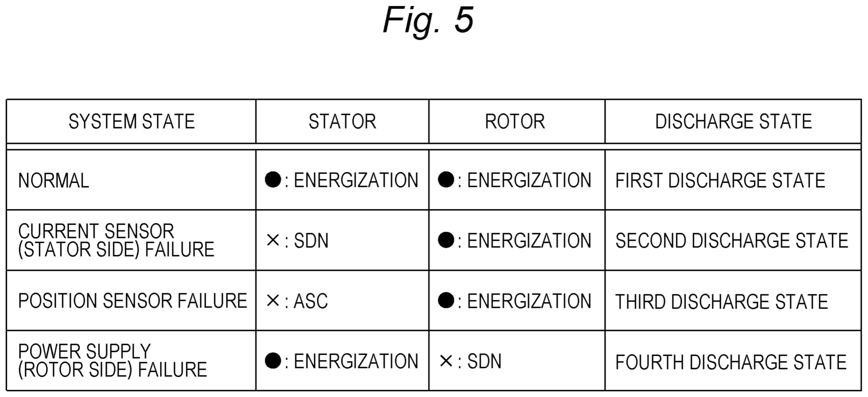

Fig. 4 is a schematic flowchart illustrating an example of a discharge process corresponding to a system state (a process implemented by the selection unit 154). Fig. 5 is an explanatory diagram of Fig. 4, illustrating various predetermined conditions. Figs. 6 to 9 are explanatory diagrams of a discharge state formed by a first control unit 155 (see Fig. 3A) and a second control unit 156 (see Fig. 3A) via the selection unit 154. In each of Figs. 6 to 9, based on Fig. 1A described above, the current flow is schematically illustrated by an arrow R61 or the like, and the state of the circuit is schematically illustrated by characters "ASC" or "SDN". "ASC" is an abbreviation for "Active Short Circuit", and SDN is an abbreviation for "Shut Down".

In the present embodiment, based on a predetermined condition, the selection unit 154 selectively activates one of the first control unit 155 and the second control unit 156. In the example illustrated in Fig. 4, the predetermined condition is a combination of a first predetermined condition to a fourth predetermined condition.

Specifically, when the first predetermined condition is satisfied ("YES" in step S400), the selection unit 154 activates the first control unit 155 to realize a first discharge state (discharge state illustrated in Fig. 6) (step S402).

As illustrated in Fig. 5, the first predetermined condition is satisfied when the system state is determined to be normal. Whether the system state is normal may be determined based on the stator-side sensor information and/or rotor-side sensor information described above.

As schematically illustrated in Fig. 6, the first discharge state corresponds to a state in which both the power conversion circuit unit 63 and the bridge circuit unit 641 are operated so that the voltage across the smoothing capacitor 62 becomes equal to or less than the reference voltage. Specifically, the first control unit 155 controls the power conversion circuit unit 63 such that normal rapid discharge by the power conversion circuit unit 63 is realized. At this time, the first control unit 155 causes only the d-axis current to flow so as not to generate torque of the rotating electrical machine 3 (arrow R61 in Fig. 6) (an example of a first drive state). As a result, the electric charge on the positive electrode side of the smoothing capacitor 62 flows to the ground via the power conversion circuit unit 63, and rapid discharge is realized. Hereinafter, such an energization mode in which only the d-axis current flows is also referred to as "d-axis energization".

More specifically, the first control unit 155 executes a rapid discharge process such that the voltage across the smoothing capacitor 62 becomes equal to or less than the reference voltage within a relatively short time ΔT defined in advance. Note that the time ΔT may correspond to the time (e.g., 1 second or 2 seconds) related to required specifications from a vehicle manufacturer. In this case, the first control unit 155 controls the on/off state of the switching elements SW3, SW4 of the power conversion circuit unit 63 such that the torque generated by the rotating electrical machine 3 becomes 0[N]. For example, the first control unit 155 may control the torque generated by the rotating electrical machine 3 to be "0" by setting the q-axis current command value to "0". Hereinafter, such rapid discharge is also referred to as "normal rapid discharge on the stator 320 side" for distinction.

In addition, the first control unit 155 operates to realize discharge of the smoothing capacitor 62 by controlling the bridge circuit unit 641 to cause a current to flow to the rotor winding 316. Specifically, the first control unit 155 turns on the switching elements SW1, SW2 and maintains the on state (an example of the first drive state). When the switching elements SW1, SW2 are turned on, the high-potential-side line 20 and the low-potential-side line 22 are electrically connected via the rotor winding 316. That is, both ends of the smoothing capacitor 62 are electrically connected via the rotor winding 316 (arrow R62 in Fig. 6). As a result, rapid discharge of the smoothing capacitor 62 is realized via the rotor winding 316. Hereinafter, the rapid discharge realized via the rotor winding 316 in this way is also referred to as "rapid discharge via the rotor winding 316" in order to distinguish from the normal rapid discharge on the stator 320 side described above.

According to such a first discharge state, both normal rapid discharge on the stator 320 side and rapid discharge via the rotor winding 316 are executed, so that the time required for discharge can be significantly reduced as compared with a case where only one is executed.

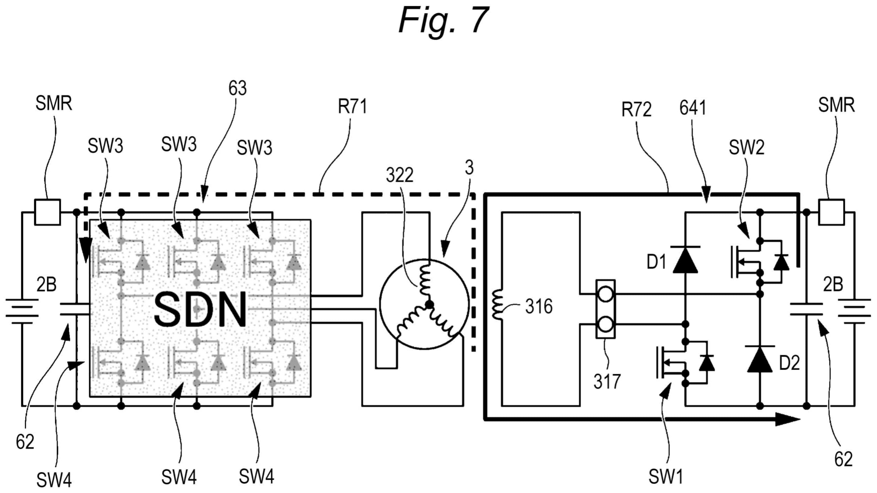

When the second predetermined condition is satisfied ("YES" in step S404), the selection unit 154 activates the second control unit 156 to realize a second discharge state (discharge state illustrated in Fig. 7) (step S406).

As illustrated in Fig. 5, the second predetermined condition is satisfied when it is determined that the system state is abnormal and the cause of the abnormality is on the stator 320 side (i.e., the stator-side sensor information is abnormal). In the present embodiment, as an example, the second predetermined condition is satisfied when an abnormality is detected in the current sensor 400 that detects the current flowing through the rotating electrical machine 3.

As schematically shown in Fig. 7, the second discharge state corresponds to a state in which only the bridge circuit unit 641 among the power conversion circuit unit 63 and the bridge circuit unit 641 is operated so that the voltage across the smoothing capacitor 62 becomes equal to or less than a reference voltage.

In this case, the second control unit 156 operates so as to realize discharge of the smoothing capacitor 62 by controlling the bridge circuit unit 641 to cause a current to flow to the rotor winding 316. Specifically, the second control unit 156 turns on the switching elements SW1, SW2 and maintains the on state (an example of a third drive state). Note that "maintaining the on state" is a concept that includes turning to an on state by a pulse width modulation (PWM) operation (i.e., maintaining a state in which the duty ratio is significantly greater than 0). When the switching elements SW1, SW2 are turned on, the high-potential-side line 20 and the low-potential-side line 22 are electrically connected via the rotor winding 316. That is, rapid discharge via the rotor winding 316 is implemented.

At this time, the second control unit 156 stops (shuts down) the power conversion circuit unit 63 (an example of the third drive state). That is, the second control unit 156 does not perform on/off control of the switching elements SW3, SW4 in the second discharge state. When rapid discharge via the rotor winding 316 is implemented, an induced current is generated via the stator winding 322 (arrow R72 in Fig. 7) due to the current (arrow R71 in Fig. 7) flowing through the rotor winding 316. This induced current flows in a direction to charge the smoothing capacitor 62, but since rapid discharge via the rotor winding 316 prevails, discharge of the smoothing capacitor 62 is achieved.

According to such a second discharge state, even when it is determined that there is an abnormality on the stator 320 side, discharge of the smoothing capacitor 62 can be realized by rapid discharge via the rotor winding 316. That is, in a situation where the current cannot be managed on the stator 320 side due to an abnormality in the current sensor 400, normal rapid discharge on the stator 320 side can be prohibited, and discharge of the smoothing capacitor 62 can still be realized on the rotor 310 side.

In the normal rapid discharge on the stator 320 side described above, when the d-axis cannot be accurately recognized due to an abnormality (error or failure) in the position sensor 402, a q-axis component is unintentionally added, resulting in a risk of torque generation due to energization. In this regard, according to the second discharge state, since the power conversion circuit unit 63 is stopped, such a risk can be avoided.

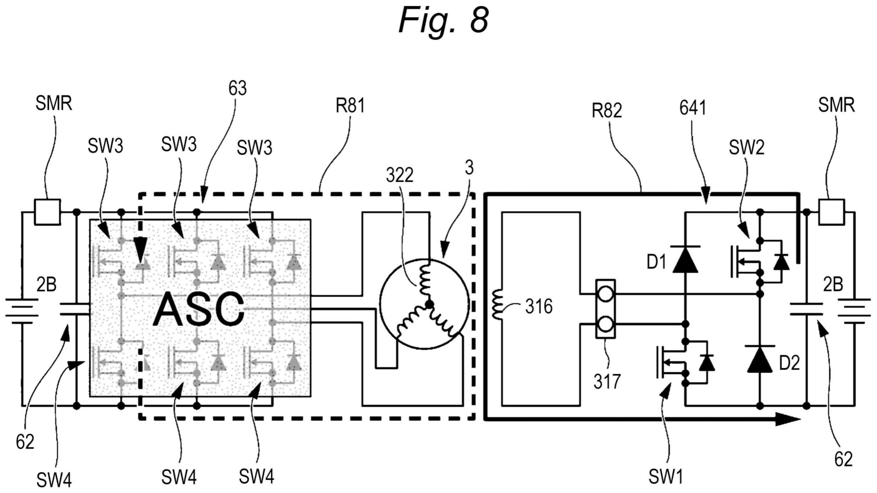

When the third predetermined condition is satisfied ("YES" in step S408), the selection unit 154 activates the first control unit 155 to realize a third discharge state (discharge state illustrated in Fig. 8) (step S410).

As illustrated in Fig. 5, the third predetermined condition is satisfied when it is determined that the system state is abnormal and the cause of the abnormality is on the stator 320 side (i.e., the rotor-side sensor information is abnormal). In the present embodiment, the third predetermined condition is satisfied when an abnormality is detected in the position sensor 402 that detects the rotation angle of the rotating electrical machine 3.

As schematically shown in Fig. 8, the third discharge state corresponds to a state in which only the bridge circuit unit 641 among the power conversion circuit unit 63 and the bridge circuit unit 641 is operated so that the voltage across the smoothing capacitor 62 becomes equal to or less than a reference voltage.

In this case, the first control unit 155 operates to realize discharge of the smoothing capacitor 62 by controlling the bridge circuit unit 641 to cause a current to flow to the rotor winding 316 (an example of a second drive state). Specifically, the first control unit 155 turns on the switching elements SW1, SW2 and maintains the on state. When the switching elements SW1, SW2 are turned on, the high-potential-side line 20 and the low-potential-side line 22 are electrically connected via the rotor winding 316. That is, rapid discharge via the rotor winding 316 is implemented.

At this time, the first control unit 155 controls the power conversion circuit unit 63 to be in the ASC state. Specifically, among the switching elements SW3, SW4 of the power conversion circuit unit 63, the first control unit 155 turns on all the switching elements on one of the upper-stage switching element SW3 connected to the positive electrode side or the lower-stage switching element SW4 connected to the negative electrode side, and turns off all the switching elements on the other of the upper-stage switching element SW3 and the lower-stage switching element SW4 (an example of the second drive state). Such an ASC state can be realized even when the position sensor 40 is abnormal.

Here, when rapid discharge via the rotor winding 316 is realized, an induced current is generated in the stator winding 322 (arrow R82 in Fig. 8) due to the current (arrow R81 in Fig. 8) flowing through the rotor winding 316. When the ASC state is formed in such a state, an induced current circulates between the stator winding 322 and the power conversion circuit unit 63. As a result, it is possible to prevent the smoothing capacitor 62 from being charged by an induced current as compared with the second discharge state described above.

According to such a third discharge state, even when it is determined that there is an abnormality in the position sensor 40 on the stator 320 side, discharge of the smoothing capacitor 62 can be realized by rapid discharge via the rotor winding 316. At this time, by forming the ASC state, it is possible to efficiently realize discharge of the smoothing capacitor 62 on the rotor 310 side while preventing the charge on the stator 320 side.

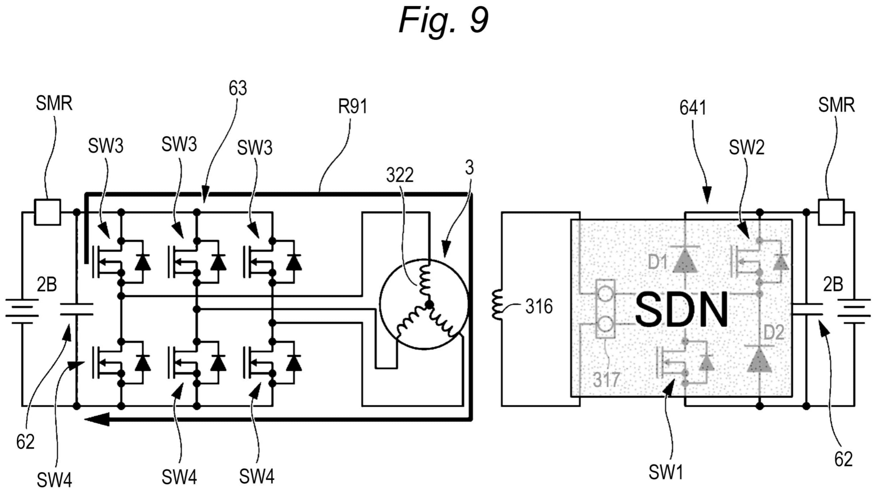

When the fourth predetermined condition is satisfied ("YES" in step S412), the selection unit 154 activates the second control unit 156 to realize a fourth discharge state (the discharge state in Fig. 9) (step S414).

As illustrated in Fig. 5, the fourth predetermined condition is satisfied when it is determined that the system state is abnormal and the cause of the abnormality is on the rotor 310 side including the power supply circuit unit 64 (i.e., the rotor-side sensor information is abnormal).

As schematically shown in Fig. 9, the fourth discharge state corresponds to a state in which only the power conversion circuit unit 63 among the power conversion circuit unit 63 and the bridge circuit unit 641 is operated so that the voltage across the smoothing capacitor 62 becomes equal to or less than the reference voltage.

In this case, the second control unit 156 executes a rapid discharge process such that the voltage across the smoothing capacitor 62 becomes equal to or less than the reference voltage within a relatively short time ΔT defined in advance. That is, the normal rapid discharge on the stator 320 side described above is executed (see arrow R91) (an example of a fourth drive state).

At this time, the second control unit 156 stops (shuts down) the bridge circuit unit 641. That is, in the fourth discharge state, the second control unit 156 does not turn on the switching elements SW1, SW2 but maintains the switching elements SW1, SW2 in the off state (an example of the fourth drive state).

According to such a fourth discharge state, even when it is determined that there is an abnormality on the rotor 310 side including the power supply circuit unit 64, discharge of the smoothing capacitor 62 can be realized. Here, when the normal rapid discharge on the stator 320 side is realized, an induced current may be generated in the rotor winding 316 due to the current flowing through the stator winding 322. In particular, the d-axis energization has a magnetic flux orthogonal to the rotor magnetic flux, and generates the maximum induced power on the rotor side. In the present embodiment, by stopping (shutting down) operation of the rotor 310 side, the influence of an induced current that may be generated in the rotor winding 316 can be reduced or eliminated.

Note that the processing order in Fig. 4 is merely an example, and may be changed as appropriate. That is, the order of determination of the first predetermined condition to the fourth predetermined condition is arbitrary. For example, whether the third predetermined condition is satisfied (step S408) may be determined before whether the second predetermined condition is satisfied (step S404).

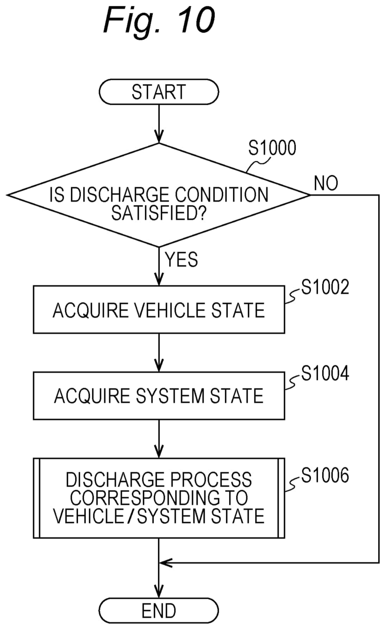

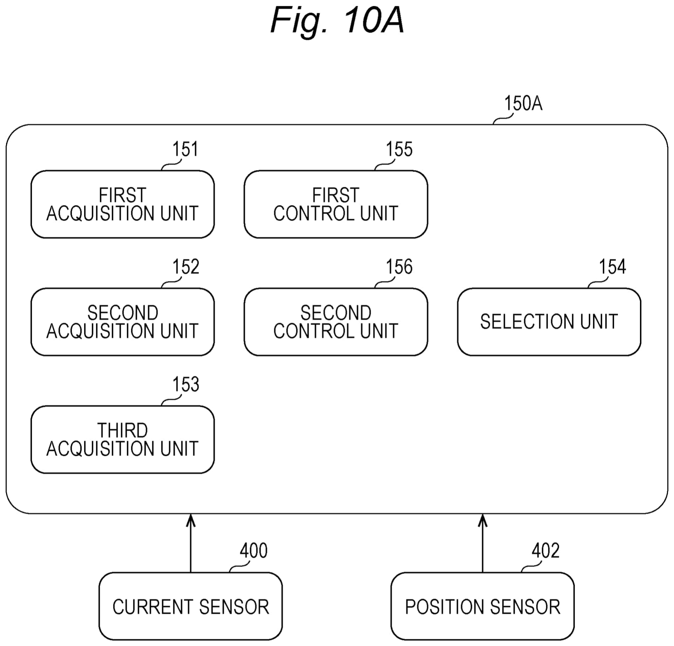

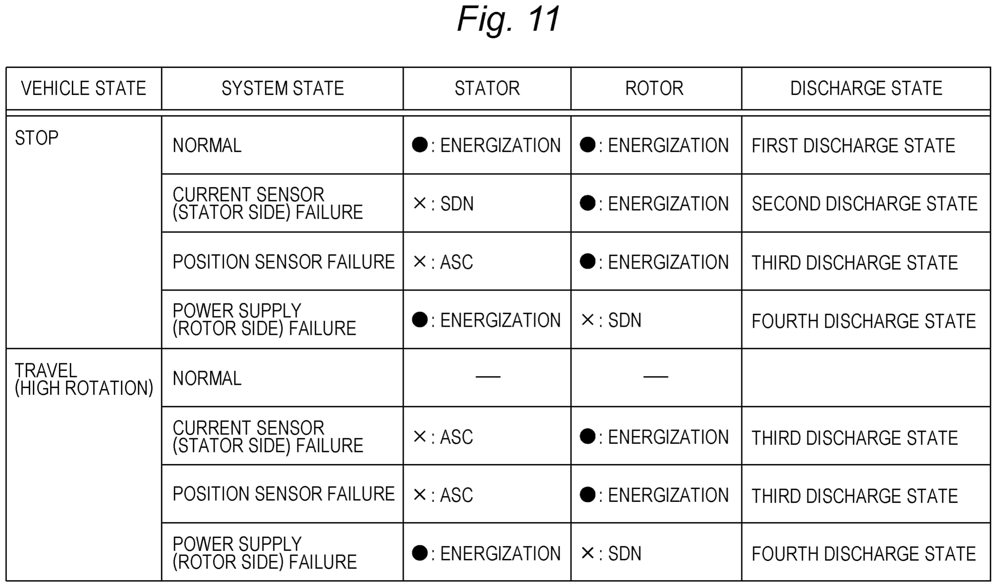

Next, another embodiment will be described with reference to Figs. 10 and 11. Hereinafter, for the sake of distinction, the embodiment described above is also referred to as a "first embodiment", and another embodiment described below is also referred to as a "second embodiment".

Fig. 10 is a schematic flowchart illustrating another example of the processing of a microcomputer 150A related to rapid discharge of the smoothing capacitor 62. Fig. 10A is a block diagram illustrating functions of the microcomputer 150A that implements the processing of Fig. 10. Fig. 11 is an explanatory diagram of Fig. 10, illustrating various predetermined conditions.

As illustrated in Fig. 10, the second embodiment is substantially different from the first embodiment described above in that step S1002 is added.

In step S1002, the microcomputer 150A acquires (recognizes) the traveling state of the vehicle. For example, the microcomputer 150A acquires vehicle speed information from a wheel speed sensor (or an ECU that calculates a vehicle speed) via an appropriate bus such as a controller area network (CAN). Note that the microcomputer 150A may acquire information indicating a brake state (e.g., sensor information from a master cylinder pressure or a pedal force sensor) in addition to the vehicle speed information. In this case, the microcomputer 150 implements an example of a third acquisition unit 153 (see Fig. 10A) that acquires the traveling state of the vehicle.

Then, in step S1006, based on the traveling state of the vehicle and the system state, the microcomputer 150A executes a discharge process corresponding to the traveling state of the vehicle and the system state. Specifically, as illustrated in Fig. 11, any one of the first discharge state to the fourth discharge state is realized based on various predetermined conditions related to the traveling state of the vehicle and the system state.

More specifically, when the traveling state of the vehicle is "stopped", one of the first discharge state to the fourth discharge state described above is implemented based on various predetermined conditions in the same correspondence relationship as that of the first embodiment described above with reference to Fig. 5. Note that a method of determining whether the traveling state of the vehicle is "stopped" is arbitrary. For example, when the vehicle speed is 0 or an extremely low vehicle speed value, the traveling state of the vehicle may be determined to be "stopped".

On the other hand, when the traveling state of the vehicle is "traveling", as illustrated in Fig. 11, one of the third discharge state or the fourth discharge state is realized based on various predetermined conditions in a correspondence relationship different from that during stop. Specifically, when the second predetermined condition described above is satisfied, the third discharge state is formed, as in the case where the third predetermined condition described above is satisfied.

During traveling, even when the first predetermined condition is satisfied, the first discharge state is not formed (no special discharge state is formed). This is because there is no need for discharging during traveling.

As described above, according to the processing illustrated in Fig. 10, various discharge controls can be executed in accordance with the traveling state of the vehicle and the system state.

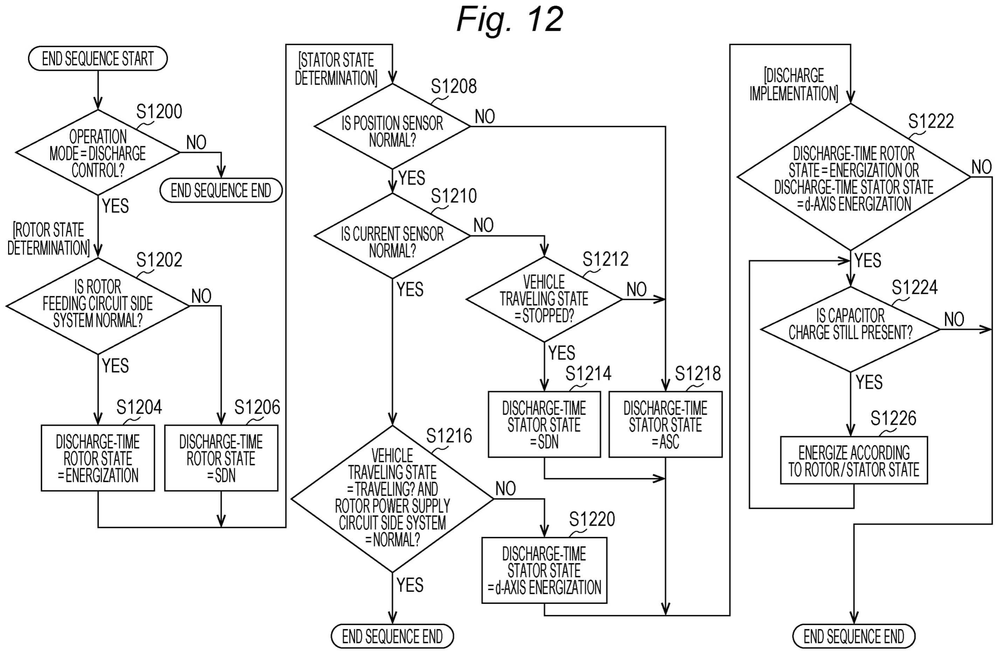

Fig. 12 is a flowchart illustrating a further detailed control example of the microcomputer 150A in the second embodiment.

In step S1200, the microcomputer 150A determines whether the operation mode is a discharge control mode. The discharge control mode may be formed, for example, when the rapid discharge condition described above is satisfied. In a case where the determination result is "YES", the process proceeds to step S1202, and in other cases, the process ends.

In step S1202, the microcomputer 150A determines whether the system on the rotor power supply circuit side is normal. This determination can be made based on the rotor-side sensor information described above. For example, when the rotor-side sensor information indicates an abnormal value in a predetermined manner, it may be determined that the system on the rotor power supply circuit side is not normal. In a case where the determination result is "YES", the process proceeds to step S1204, and in other cases, the process proceeds to step S1206.

In step S1204, the microcomputer 150A sets a discharge-time rotor state to "energization". That is, the microcomputer 150A turns on the switching elements SW1, SW2 and maintains the on state of the switching elements SW1, SW2.

In step S1206, the microcomputer 150A sets the discharge-time rotor state to "SDN". That is, the microcomputer 150A turns off the switching elements SW1, SW2 and maintains the off state of the switching elements SW1, SW2.

In step S1208, the microcomputer 150A determines whether the position sensor 402 is normal. Whether the position sensor 402 is normal may be determined based on diagnostic information or the like. In a case where the determination result is "YES", the process proceeds to step S1210, and in other cases, the process proceeds to step S1218.

In step S1210, the microcomputer 150A determines whether the current sensor 400 is normal. Whether the current sensor 400 is normal may be determined based on diagnostic information or the like. In a case where the determination result is "YES", the process proceeds to step S1216, and in other cases, the process proceeds to step S1212.

In step S1212, the microcomputer 150A determines whether the traveling state of the vehicle is stopped. In a case where the determination result is "YES", the process proceeds to step S1214, and in other cases (i.e., in a case where the traveling state of the vehicle is traveling), the process proceeds to step S1218.

In step S1214, the microcomputer 150A sets the stator state at the time of discharge to "SDN". That is, the microcomputer 150A turns off all the switching elements SW3, SW4 of the power conversion circuit unit 63. When step S1214 is completed, the process proceeds to step S1222.

In step S1216, the microcomputer 150A determines whether the traveling state of the vehicle is traveling and the system on the rotor power supply circuit side is normal. In a case where the determination result is "YES", the process ends, and in other cases (i.e., in a case where the traveling state of the vehicle is stopped, etc.), the process proceeds to step S1220.

In step S1218, the microcomputer 150A sets a stator state at the time of discharge to "ASC". That is, among the switching elements SW3, SW4 of the power conversion circuit unit 63, the microcomputer 150A turns on all the switching elements on one of the upper-stage switching element SW3 connected to the positive electrode side or the lower-stage switching element SW4 connected to the negative electrode side, and turns off all the switching elements on the other of the upper-stage switching element SW3 and the lower-stage switching element SW4.

In step S1220, the microcomputer 150A sets the stator state at the time of discharge to "d-axis energization". That is, the microcomputer 150A controls the power conversion circuit unit 63 to flow only the d-axis current so as not to generate torque of the rotating electrical machine 3.

In step S1222, the microcomputer 150A determines whether to shift to forming the discharge state. That is, the microcomputer 150A determines whether the discharge-time rotor state is "energization" or the discharge-time stator state is "d-axis energization". In a case where the determination result is "YES", the process proceeds to step S1224, and in other cases, the process ends.

In step S1224, the microcomputer 150A determines whether electric charge of the smoothing capacitor 62 (referred to as "capacitor charge" in Fig. 12) remains. The presence or absence of electric charge of the smoothing capacitor 62 may be determined based on the value of the voltage across the smoothing capacitor 62. In a case where the determination result is "YES", the process enters a standby state until electric charge of the smoothing capacitor 62 is eliminated, and in other cases, the process ends.

In step S1226, the microcomputer 150A executes and continues discharging corresponding to each set state (each set state of the discharge-time rotor state and the discharge-time stator state).

According to the second embodiment, the same effects as those of the first embodiment described above can be obtained. In particular, according to the second embodiment, since the traveling state of the vehicle is taken into consideration, it is possible to form the discharge state corresponding to the traveling state of the vehicle.

Although each embodiment has been described in detail above, the present disclosure is not limited to a specific embodiment, and various modifications and changes can be made within the scope described in the claims. In addition, all or a plurality of the components of the embodiments described above can be combined.

With respect to the above embodiments, the following supplementary notes are further disclosed.

### [Supplementary Note 1]

A drive device for a rotating electrical machine that drives a field winding-type rotating electrical machine in which a rotor winding is wound around a rotor core, the drive device including:
an electric circuit unit between the rotating electrical machine and a power supply; and
a control device that controls the electric circuit unit,
the electric circuit unit includes
a smoothing capacitor between a high-potential side line and a low-potential side line of the power supply,
a power conversion circuit unit that is electrically connected to both ends of the smoothing capacitor and supplies alternating current power to a stator winding of the rotating electrical machine, and
a power supply circuit unit that is electrically connected to both ends of the smoothing capacitor in a manner parallel with the power conversion circuit unit and configured to supply power to the rotor winding and,
the control device includes
a first control unit that drives both the power conversion circuit unit and the power supply circuit unit when the smoothing capacitor is discharged,
a second control unit that drives only one of the power conversion circuit unit and the power supply circuit unit when the smoothing capacitor is discharged, and
a selection unit that selectively activates one of the first control unit and the second control unit based on a predetermined condition.

### [Supplementary Note 2]

The drive device for a field winding-type rotating electrical machine according to Supplementary Note 1, wherein
the control device further includes
a first acquisition unit that acquires sensor information used to control the power conversion circuit unit, the sensor information being stator-side sensor information from a first sensor, and
a second acquisition unit that acquires sensor information used to control the power supply circuit unit, the sensor information being rotor-side sensor information from a second sensor, and
the predetermined condition includes a condition related to a state of at least one of the first sensor or the second sensor.

### [Supplementary Note 3]

The drive device for a field winding-type rotating electrical machine according to Supplementary Note 1 or 2, wherein
the control device further includes a third acquisition unit that acquires a traveling state of a vehicle, and
the predetermined condition further includes a condition related to a traveling state of the vehicle.

### [Supplementary Note 4]

The drive device for a field winding-type rotating electrical machine according to any one of Supplementary Notes 1 to 3, wherein
the first control unit allows selective formation of a first drive state in which the power conversion circuit unit rapidly discharges the smoothing capacitor while the power supply circuit unit electrically connects both ends of the smoothing capacitor via the rotor winding, and a second drive state in which the power conversion circuit unit circulates a current induced in the stator winding in the power conversion circuit unit while the power supply circuit unit electrically connects both ends of the smoothing capacitor via the rotor winding, and
the selection unit selectively forms one of the first drive state and the second drive state when selectively activating the first control unit based on the predetermined condition.

### [Supplementary Note 5]

The drive device for a field winding-type rotating electrical machine according to any one of the Supplementary Notes 1 to 4, wherein
the second control unit allows selective formation of a third drive state in which only the power supply circuit unit among the power conversion circuit unit and the power supply circuit unit is driven, and a fourth drive state in which only the power conversion circuit unit is driven, and
the selection unit selectively forms one of the third drive state and the fourth drive state when selectively activating the second control unit based on the predetermined condition.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A drive device (5) for a rotating electrical machine that drives a field winding-type rotating electrical machine (3) in which a rotor winding (316) is wound around a rotor core (312), the drive device (5) comprising:
an electric circuit unit (60) between the rotating electrical machine (3) and a power supply; and
a control device (150) that controls the electric circuit unit (60),
wherein
the electric circuit unit (60) includes
a smoothing capacitor (62) between a high-potential side line and a low-potential side line of the power supply,
a power conversion circuit unit (63) that is electrically connected to both ends of the smoothing capacitor (62) and supplies alternating current power to a stator winding (312) of the rotating electrical machine (3), and
a power supply circuit unit (64) that is electrically connected to both ends of the smoothing capacitor (62) in a manner parallel with the power conversion circuit unit (63) and configured to supply power to the rotor winding (316), and
the control device (150) includes
a first control unit (155) that drives both the power conversion circuit unit (63) and the power supply circuit unit (64) when the smoothing capacitor (62) is discharged,
a second control unit (156) that drives only one of the power conversion circuit unit (63) and the power supply circuit unit (64) when the smoothing capacitor (62) is discharged, and
a selection unit (154) that selectively activates one of the first control unit (155) and the second control unit (156) based on a predetermined condition.

2. The drive device (5) for a field winding-type rotating electrical machine according to Claim 1, wherein
the control device (150) further includes
a first acquisition unit (151) that acquires sensor information used to control the power conversion circuit unit (63), the sensor information being stator-side sensor information from a first sensor, and
a second acquisition unit (152) that acquires sensor information used to control the power supply circuit unit (64), the sensor information being rotor-side sensor information from a second sensor, and
the predetermined condition includes a condition related to a state of at least one of the first sensor or the second sensor.

3. The drive device (5) for a field winding-type rotating electrical machine according to Claim 1 or 2, wherein
the control device (150) further includes a third acquisition unit (153) that acquires a traveling state of a vehicle, and
the predetermined condition further includes a condition related to a traveling state of the vehicle.

4. The drive device (5) for a field winding-type rotating electrical machine according to any one of Claims 1 to 3, wherein
the first control unit (155) allows selective formation of a first drive state in which the power conversion circuit unit (63) rapidly discharges the smoothing capacitor (62) while the power supply circuit unit (64) electrically connects both ends of the smoothing capacitor (62) via the rotor winding (316), and a second drive state in which the power conversion circuit unit (63) circulates a current induced in the stator winding (312) in the power conversion circuit unit (63) while the power supply circuit unit (64) electrically connects both ends of the smoothing capacitor (62) via the rotor winding (316), and
the selection unit (154) selectively forms one of the first drive state and the second drive state when selectively activating the first control unit (155) based on the predetermined condition.
